# EUROPEAN PATENT APPLICATION

(11) **EP 2 722 585 A1**
(43) Date of publication of application: **23.04.2014**
(21) Application number: 11867701.2
(22) Date of filing: 18.10.2011
(51) Int. Cl.: F21V 23/00, F21Y 101/02

(54) **LED LIGHT BULB HAVING LIGHT-SHIELDING STRUCTURE**

(30) Priority: 14.06.2011 CN 201120199318 U
(71) Applicant: Chen, Ming Yun, Guangdong 523000 (CN)
(72) Inventor: Chen, Ming Yun, Guangdong 523000 (CN)
(74) Representative: Viering, Jentschura & Partner Patent- und Rechtsanwälte
(86) International application number: PCT/CN2011/080921
(87) International publication number: WO 2012/171287

(57) **Abstract**

A LED light bulb with a light-shielding structure is provided. The LED light bulb includes a bulb base (1), a transparent cover (2), a sensor (3) and a light-shielding barrel (4). The transparent cover (2) is fixed on a top of the bulb base (1). A lower end of the light-shielding barrel (4) is fixed on the bulb base (1). An upper end of the light-shielding barrel (4) is extended toward the transparent cover (2). The sensor (3) is disposed within the light-shielding barrel (4). By the light-shielding barrel (4), the light beam emitted by the LED light bulb can be effectively prevented from being directly projected onto the sensor, or the light beam reflected or refracted by the transparent cover (2) can be effectively prevented from being projected onto the sensor (3). Since the light beam emitted by the LED light bulb is not received by the sensor (3), the possibility of causing the erroneous operation of the sensor will be minimized, and the sensing accuracy and sensitivity of the LED light bulb will be enhanced.

## Description

### FIELD OF THE INVENTION

The present invention relates to a light bulb technology, and more particularly to a LED light bulb with a light-shielding structure.

### BACKGROUND OF THE INVENTION

Nowadays, a LED light bulb with a sensing function has been disclosed. Generally, a sensor is disposed on a top of the LED light bulb. By means of the sensor, the LED light bulb can sense a human body or a light beam. When a human body enters a sensing range of the sensor, the LED light bulb is turned on. This technology is disclosed in for example Chinese Patent No. 200810097926.1 (entitled "Lighting device with sensing function") and Chinese Patent No. 02102075.2 (entitled "Power-saving LED lamp"). However, after the LED light bulb is turned on, a light beam emitted by the LED light bulb may strike the sensor. Alternatively, the light beam emitted by the LED light bulb may be reflected and refracted by a transparent cover and then projected onto the sensor, so that the light beam emitted by the LED light bulb is received by the sensor. Since the light beam emitted by the LED light bulb may interfere with the sensing action of the sensor, an erroneous operation of the sensor is readily generated.

Therefore, there is a need of providing an improved LED light bulb in order to overcome the above drawbacks.

### SUMMARY OF THE INVENTION

The present invention provides a LED light bulb with a light-shielding structure in order to overcome the drawbacks of the conventional LED light bulb. By means of the light-shielding structure, the light beam emitted by the LED light bulb and refracted or reflected by a transparent cover is prevented from being projected onto the sensor. Under this circumstance, the possibility of causing the erroneous operation of the sensor will be minimized, and thus the sensing accuracy and sensitivity of the LED light bulb will be enhanced.

For achieving the above objects, the present invention is implemented by using the following technical programs.

In accordance with an aspect of the present invention, there is provided a LED light bulb with a light-shielding structure. The LED light bulb includes a bulb base, a transparent cover, a sensor and a light-shielding barrel. The transparent cover is fixed on a top of the bulb base. A lower end of the light-shielding barrel is fixed on the bulb base. An upper end of the light-shielding barrel is extended upwardly toward the transparent cover or protruded upwardly over the transparent cover. The sensor is disposed within the light-shielding barrel.

In an embodiment, the LED light bulb further includes a LED circuit board, plural LED dies are disposed on the LED circuit board, and the LED circuit board is fixed on the top of the bulb base. Moreover, the light-shielding barrel has a shape of a hollow cylinder.

In an embodiment, the upper end of the light-shielding barrel is coupled with the bulb base.

In an embodiment, a condenser lens is coupled with the upper end of the light-shielding barrel.

In an embodiment, the transparent cover has a perforation, and the upper end of the light-shielding barrel is inserted upwardly into the perforation of the transparent cover.

In an embodiment, a top edge of the light-shielding barrel is at the same level as a top edge of the perforation of the transparent cover, or the top edge of the light-shielding barrel is protruded upwardly over the top edge of the perforation of the transparent cover.

In an embodiment, the bulb base includes a heat sink and a bulb socket. The bulb socket is fixed on a lower end of the heat sink. A LED circuit board, the transparent cover, the sensor and the light-shielding barrel are fixed on a top of the heat sink.

In an embodiment, the sensor is selected from one or two of an infrared sensor, a microwave sensor and a light sensor.

Due to the above technical programs, the LED light bulb of the present invention has many benefits. By the light-shielding barrel, the light beam emitted by the LED light bulb can be effectively prevented from being directly projected onto the sensor. Furthermore, by the light-shielding barrel, the light beam emitted by the LED light bulb and reflected or refracted by the transparent cover can be effectively prevented from being projected onto the sensor. Since the light beam emitted by the LED light bulb is not received by the sensor, the light beam emitted by the LED light bulb will not interfere with the sensing action of the sensor. Under this circumstance, the possibility of causing the erroneous operation of the sensor will be minimized, and thus the sensing accuracy and sensitivity of the LED light bulb will be enhanced.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic perspective view illustrating a LED light bulb according to an embodiment of the present invention;
FIG. 2 is a schematic cross-sectional view illustrating the LED light bulb of FIG. 1 and taken along the line AA; and
FIG. 3 is a schematic perspective view illustrating the LED light bulb according to the embodiment of the present invention, wherein a transparent cover is not shown.

### DETAILED DESCRIPTION OF THE PREFERRED EMBODIMENT

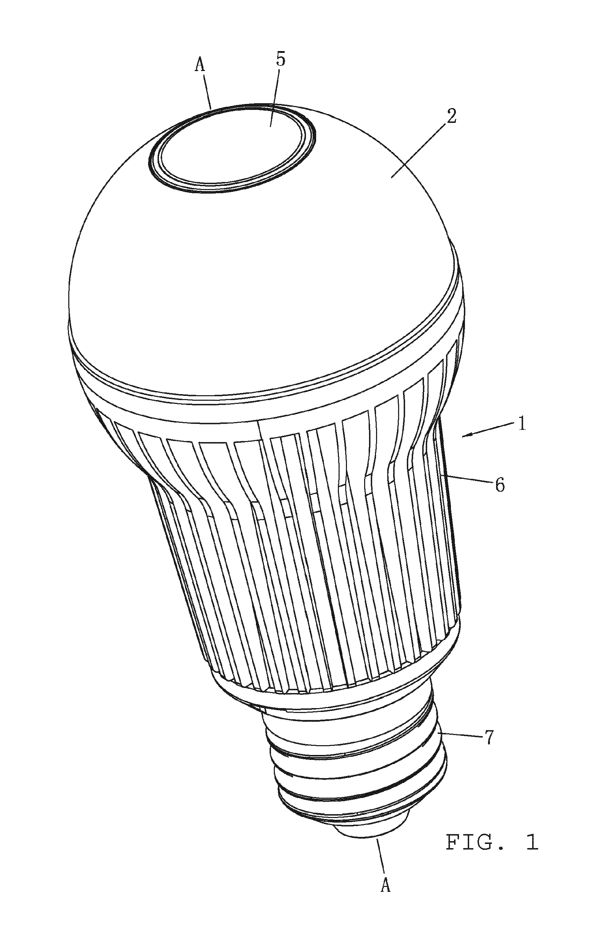

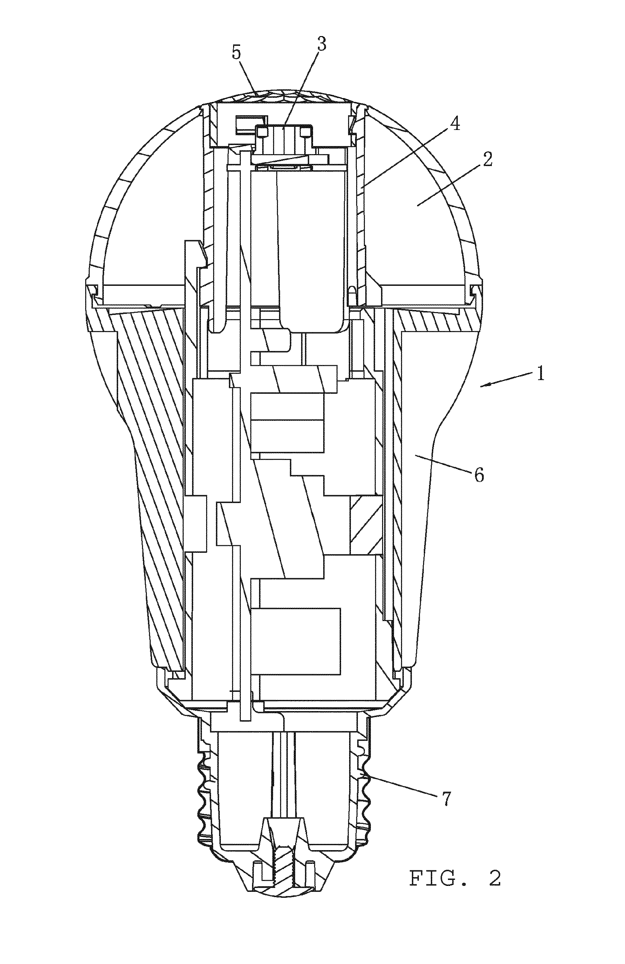

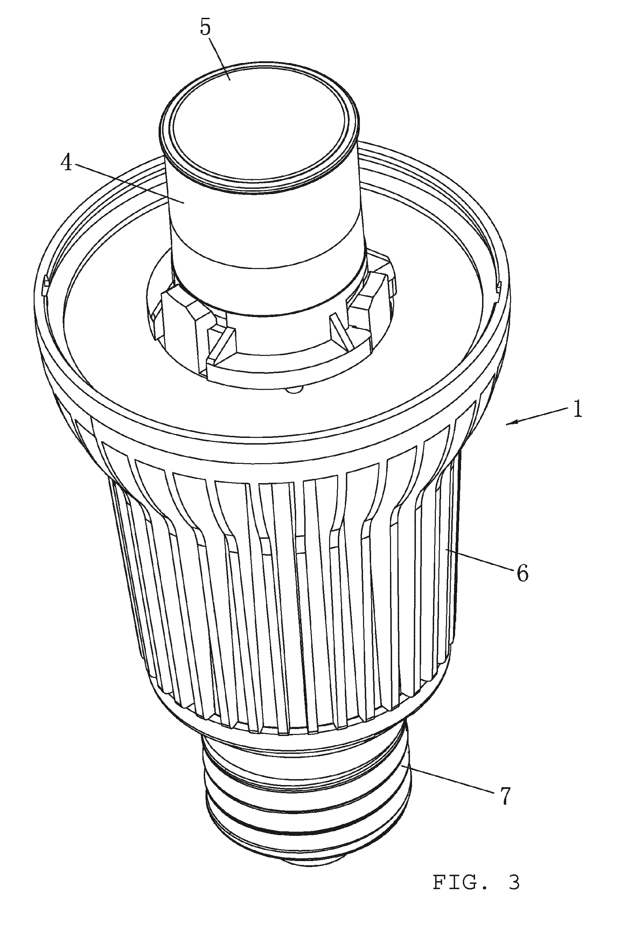

The present invention provides a LED light bulb with a light-shielding structure. Hereinafter, the LED light bulb will be illustrated with reference to FIGS. 1~3. The LED light bulb comprises a bulb base 1, a transparent cover 2, a sensor 3, and a light-shielding barrel 4. The transparent cover 2 is fixed on a top of the bulb base 1. A lower end of the light-shielding barrel 4 is fixed on the bulb base 1. An upper end of the light-shielding barrel 4 is extended upwardly toward the transparent cover 2. Alternatively, the upper end of the light-shielding barrel 4 is protruded upwardly over the transparent cover 2. Moreover, the sensor 3 is disposed within the light-shielding barrel 4.

The LED light bulb further comprises a LED circuit board. Moreover, plural LED dies are disposed on the LED circuit board. The LED circuit board is fixed on the top of the bulb base 1.

The sensor 3 is selected from one of an infrared sensor, a microwave sensor and a light sensor. Of course, the sensor 3 may be a combination of any two of an infrared sensor, a microwave sensor and a light sensor.

In accordance with the present invention, by the light-shielding barrel 4, the light beam emitted by the LED light bulb can be effectively prevented from being directly projected onto the sensor 3. Furthermore, by the light-shielding barrel 4, the light beam emitted by the LED light bulb and reflected or refracted by the transparent cover 2 can be effectively prevented from being projected onto the sensor 3. Since the light beam emitted by the LED light bulb is not received by the sensor 3, the light beam emitted by the LED light bulb will not interfere with the sensing action of the sensor 3. Under this circumstance, the possibility of causing the erroneous operation of the sensor will be minimized, and thus the sensing accuracy and sensitivity of the LED light bulb will be enhanced.

The bulb base 1 comprises a heat sink 6 and a bulb socket 7. The bulb socket 7 is fixed on a lower end of the heat sink 6. The LED circuit board, the transparent cover 2, the sensor 3 and the light-shielding barrel 4 are fixed on a top of the heat sink 6.

The light-shielding barrel 4 has a shape of a hollow cylinder. The upper end of the light-shielding barrel 4 is coupled with the bulb base 1. The light-shielding barrel 4 has a simple structure, and is easily assembled.

Moreover, a condenser lens 5 is coupled with the upper end of the light-shielding barrel 4. The curvy surface of the condenser lens 5 matches the curvy surface of the transparent cover 2. Moreover, the junction between the condenser lens 5 and the transparent cover 2 is smooth, the contour is smooth, and the appearance is elegant.

Moreover, the transparent cover 2 has a perforation. The upper end of the light-shielding barrel 4 is inserted upwardly into the perforation of the transparent cover 2.

In a preferred embodiment, a top edge the light-shielding barrel 4 is at the same level as a top edge of the perforation of the transparent cover 2. Consequently, the portion of the light beam refracted to the top edge of the light-shielding barrel 4 by the transparent cover 2 will be hindered by the top edge of the light-shielding barrel 4. Under this circumstance, the portion of the light beam refracted by the transparent cover 2 is prevented from being projected onto the sensor 3.

Alternatively, in another embodiment, the top edge of the light-shielding barrel 4 is protruded upwardly over the top edge of the perforation of the transparent cover 2. Similarly, the portion of the light beam refracted to the top edge of the light-shielding barrel 4 by the transparent cover 2 will be hindered by the top edge of the light-shielding barrel 4. Under this circumstance, the portion of the light beam refracted by the transparent cover 2 is prevented from being projected onto the sensor 3.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A LED light bulb with a light-shielding structure, said LED light bulb comprising a bulb base (1), a transparent cover (2) and a sensor (3), said transparent cover (2) being fixed on a top of said bulb base (1), **characterized in that** said LED light bulb further comprises a light-shielding barrel (4), a lower end of said light-shielding barrel (4) is fixed on said bulb base (1), an upper end of said light-shielding barrel (4) being extended upwardly toward said transparent cover (2) or protruded upwardly over said transparent cover (2), and said sensor (3) is disposed within said light-shielding barrel (4).

2. The LED light bulb with a light-shielding structure according to claim 1, wherein said LED light bulb further comprises a LED circuit board, plural LED dies are disposed on said LED circuit board, and said LED circuit board is fixed on said top of said bulb base (1), wherein said light-shielding barrel (4) has a shape of a hollow cylinder.

3. The LED light bulb with a light-shielding structure according to claim 2, wherein said upper end of said light-shielding barrel (4) is coupled with said bulb base (1).

4. The LED light bulb with a light-shielding structure according to claim 3, wherein a condenser lens (5) is coupled with said upper end of said light-shielding barrel (4).

5. The LED light bulb with a light-shielding structure according to claim 1, wherein said transparent cover (2) has a perforation, and said upper end of said light-shielding barrel is inserted upwardly into said perforation of said transparent cover (2).

6. The LED light bulb with a light-shielding structure according to claim 5, wherein a top edge of said light-shielding barrel (4) is at the same level as a top edge of said perforation of said transparent cover (2), or said top edge of said light-shielding barrel (4) is protruded upwardly over said top edge of said perforation of said transparent cover (2).

7. The LED light bulb with a light-shielding structure according to claim 6, wherein said bulb base (1) comprises a heat sink (6) and a bulb socket (7), wherein said bulb socket (7) is fixed on a lower end of said heat sink (6), and a LED circuit board, said transparent cover (2), said sensor (3) and said light-shielding barrel (4) are fixed on a top of said heat sink (6).

8. The LED light bulb with a light-shielding structure according to claim 5, wherein said sensor (3) is selected from one or two of an infrared sensor, a microwave sensor and a light sensor.
